# EUROPEAN PATENT APPLICATION

(11) **EP 2 796 056 A1**
(43) Date of publication of application: **29.10.2014**
(21) Application number: 12834779.6
(22) Date of filing: 27.09.2012
(51) Int. Cl.: A23L 1/0562, A23L 1/0532, A23L 1/068, A23L 1/30

(54) **PROBIOTIC OR SYMBIOTIC GELLED PRODUCTS AND METHOD FOR THE PRODUCTION THEREOF**

(30) Priority: 30.09.2011 ES 201101089 P
(71) Applicant: Universidad Miguel Hernández De Elche, 03202-Elche (Alicante) (ES)
(72) Inventor: FRUTOS FERNÁNDEZ, Maria José, E-03202 Elche (Alicante) (ES); VALERO CASES, Estefania, E-03202 Elche (Alicante) (ES)
(74) Representative: Jiminez Brinquis, Ruben
(86) International application number: PCT/ES2012/000255
(87) International publication number: WO 2013/045724

(57) **Abstract**

The present invention consists in gelled products, such as for example gelatin or gums for food consumption, which include probiotic microorganisms and, in some of its variants, prebiotics, such products being prepared from vegetable beverages such as fruit juices , vegetables, cereals and pulses, which undergo a lactic fermentation process with at least one probiotic strain. Also claimed the process for the production of these products, which consists of the following basic steps: a) Obtaining a pasteurized or sterilized substrate, b) Substrate Fermentation c) Hydration of gelatin and of the Federation in hot water d) cooling the hydrated gelatin e) Addition of fermented vegetable beverage prebiotic selected along with the additives and h) homogenizing the mixture; g) packaging the product.

## Description

### PURPOSE OF THE INVENTION

The current invention consists in a completely new range of gelled products, such as gelatin for food consumption or jellies, which include probiotic microorganisms and, in some of its variants, prebiotics, being such products prepared from vegetal origin beverages such as fruit juices, vegetable juices, cereals juices and/or pulse juices, which are subjected to a lactic fermentation process with at least one probiotic strain.

Such beverages, in conjunction with a gelling agent and a number of additives make up the final product which has many beneficial properties for the human organism, derived from microorganisms containing and whose advantages can't be found in the existing state of the art referred to this kind of foodstuff since current methods of making gelled products do not allow the survival of microorganisms, making it impossible to attain the desired objective of improving the consumer health.

More specifically, the strains used for obtaining the probiotics or symbiotic gelled products will be selected among *Lactobacillus, Bifidus, Streptococcus* and/or yeast, and/or a prebiotic, being these employed in conjunction with gelling agents (gelatin, agar-agar , carrageenan, etc.).

### FIELD OF APPLICATION

The current invention will have application within the industry for the manufacture of foodstuffs, specifically in the manufacturing of gelled food and / or confectionery.

### BACKGROUND TO THE INVENTION

The development of probiotics in recent decades has meant a breakthrough for food industry. The high number of scientific publications thereon appearing has highlighted clinical and scientific discoveries of very diverse nature related to probiotics.

The term probiotic comes from the Greek and means "pro" for and "bios" life. It is generally used to name certain bacteria associated to beneficial health effects and could be defined as "living microorganisms that upon ingestion in certain proportion, exert a beneficial action beyond the nutritional". WHO defines them as "living microorganisms which, when supplied in adequate amounts, promote health benefits to the host organism."

Functional foods are defined as foods that besides its nutritional properties, provide the body biologically active components which contribute to cure diseases or to reduce the risk of suffering them, using proven physiological effects. Besides discussed probiotics, can find prebiotics, which are one type of functional food characterized by comprising non-digestible food ingredients that benefit consumers by stimulating the growth and / or activity of one or several strains of bacteria in the colon, and symbiotic, which include both probiotics and prebiotics.

Probiotic microorganisms consist mainly of species of the genera Lactobacillus and Bifidobacterium, as well as species of other genera as Lactococcus, Enterococcus, Streptococcus and others.

The following effects of probiotic bacteria has been proved: reduce the lactose content of dairy products, promotes the degradation of cholesterol and bile salts, they improve the immune response both local and systemic, inhibit proliferation of pathogens, they produce several beneficial metabolites and vitamins , promote degradation of cholesterol and bile salts, and help to eliminate carcinogenic compounds (American Journal of Clinical Nutrition (2001) Special issue on Prebiotics and Probiotics Feb: Vol 73 (2 suppl)).

For the years since the first definition, many products have emerged in natural food stores and supermarkets around the world that include the term probiotic in their label. However, it occurs that in some of these, microorganisms have not been adequately tested to ensure they are able to surviving in the conditions (for example, room temperature) or the amount of time (days, weeks or months) necessary from production until it reaches the final consumer.

Probiotic products most usually marketed are fermented milks and yoghurts. In fact, lactic acid bacteria (LAB), among which the species Lactobacillus is, have been used for preserving food by fermentation for thousands of years and can have a double function, acting as leavening agents in foods, may also generate benefits to health.

At present is marketed a number of gelled products where live microorganisms are not included with beneficial health effects. This problem persists because of the difficulty to include probiotics in the product formulation so that they survive a process which involves a heat treatment due to which microorganisms can't survive in sufficient numbers, maintaining such a quantity viable microorganisms in the final product during storage and marketing.

Another drawback associated with most of functional foods that do include probiotics on the market is the fact that they are usually from dairy sources, so people with lactose intolerance can not access the benefits provided by such products. Would be desirable to achieve the fact of to include probiotic microorganisms in food so that these people could consume.

The above problems have been solved with the current invention by employing vegetal origin beverages as a insertion vehicle for microorganisms so that is achieved to add in the formulations probiotics in a wide range of concentrations, obtaining considerable advantages over the industrial usual proceedings in which is not possible to add probiotics, since the gelling agent is mixed with the liquid fraction and the remaining ingredients, and thereafter is took to a very high temperatures to allow the gelification, to which no probiotic microorganisms survive. Furthermore, by the process described herein, with very small amounts of beverage are obtained microorganism concentrations required at the end of the useful life of the final product to ensure probiotic effect.

Are known by the holder of this report the existence of a number of patents registered using plant products as the basis for a lactic fermentation:
- Patent US2003031756: Method for preparing food products by fermenting soy milk with *Streptococcus thermophilus.* (Boufasssa Corinne; Tourancheau Miriam, 2003-02-13, GERVAIS DANONE, SA) (US), includes a method obtaining food with a reduced post-acidification fermentation mixtures by fermenting soy milk and grain flours or almond milk with S. thermophilus and alternately with other lactic acid bacteria. In this patent is performed the fermentation of plant material for obtaining a yoghurt type product with a composition and process characteristics, different from the products described in the invention.
- Patent ES2242541 A1: Producto fermentado sin lactosa a partir de frutos secos no legumbres y/o horchata. (Perez-Martinez, Gaspar; Miralles Aracil, Mari Carmen; Marti Vidagany, Adolfo; Martinez-Ortiz, Isabel), 1-11-2005. Consejo Superior de Investigaciones Cientificas. This patent describes the preparation of fermented beverages and probiotic lactic acid bacteria from milk or beaten almonds, other nuts or legumes (not horchata form chufa tubers) obtained. The final product has consistency, acidity and aroma similar to yoghurt. Although fermented vegetable substrates are used, these are different from those used in this invention, and the process is different and the final product is not the same to the present invention, regardless of consistency.
- Patent WO2010059022A1. Método para obtener una mezcla de probióticos, prebióticos, nutrientes con acción simbiótica sinérgica. (Cruz Serrano, Jose Antonio). 27-05-2010. Describes an ingredient containing a mixture of at least one probiotic strain which is selected from Lactobacillus bifidus, Streptococcus and yeast; at least one prebiotic, mainly inulin, along with other components (proteins, vitamins....) to be used as a functional ingredient in any primary or processed food. Examples of application listed in the patent describes the incorporation of a gelled product ingredient, which differs from that of the current invention as the procedure is different in that the base is one source of probiotic broth culture performed with a mixture of nutrients and inulin, whereas in the current invention are used vegetable juices and other fermented beverages. This example of gelled product provides no data on the viable microorganisms in the final product or product lifetime. Being different compositions to the product mentioned, the products described herein have different nutritional characteristics and probiotic properties proven in the final product throughout the service life for each of the strains of microorganisms used.
- Patent US20060141097. Symbiotic food product comprising oats and methods for manufacturing the same. (Mingruo, Guo). 29-06-2006. this invention describes a method for preparing symbiotic beverages and yoghurt like products based on oats. Although claims the preparation of aerated frozen yogurt such products, does not mention the use of gelling agents to prepare gelled product based on oats which is within the objects of the present invention.
- Patent WO28041876. Prefermented symbiotic matrix base on a cereal suspension with encapsulated probiotics, manufacture process and corresponding utilization. (De Oliveira, Patricio, Moreira da Costa, Franco Maria). 06-10-2006. this patent describes the preparation for a symbiotic matrix and microencapsulated preferment obtained from oat drink. It isn't therefore the same ingredient which is mentioned in the current invention. No description of products which is mentioned it can be used and neither how.
- Patent RU2229251: Method for obtaining of immobilized composition of functional food probiotic gelatinized product, immobilized composition and functional product comprising the same. (Nefedova N.V., Semenov G.V., Efremenko E.N., Makhlis T.A.). 04-12-2002. It is perhaps the closest to the present invention of all documents found. Describes a method for obtaining a gelatinous probiotic food product characterized by the preparation dissolving a polymer of natural origin chosen from the group of agar gels by dissolving pectin in water, or aqueous buffer milk, with a subsequent heating to a temperature of between 40 and 90 ° C. The dissolved compound obtained is a polymer of natural origin wherein probiotic biomass can be grown once or several times. During cultivation, the probiotic compound accumulates metabolites as prebiotic components. Also incorporated many other prebiotic components by continuous agitation of compound. Later, the obtained mixture is poured into the commercial container and cooled, thus achieving a stabilized composition in form of a thermoreversible gel with an equitable distribution of the components in the following composition in mass%: natural origin polymer 0.9 to 2.7 (dry weight or dry residue); probiotic biomass culture from the 0.75 to 3.5 (dry mass or dry residue) of prebiotic components sum up to 4, and water or aqueous buffer or milk, to 100. At the same time, the amount of probiotics material capable of living present in the stabilized compound is: 108 to 109 cfu / g. The thickness limit is: 1050 - 1500 Pa, and the moisture and the pH were set at: 64 to 78% and the pH is 3.7 to 6.2. The patent that is proposed herein differs from this invention in the process, as opposed to that, it uses juices and fermented beverages at different concentrations mixed with the polymer of the probiotic microorganism source, adding product after reducing temperature in the gelling polymer preparation. However, in the mentioned patent adds the lyophilized microorganism with prebiotics, not specifying the temperature to which the probiotic is added, nor to cool the product to add, being difficult the survival of microorganisms in the range specified (40 - 90 ° C). In the present invention the probiotic however remains alive and active throughout the process of manufacture and storage, while in said patent the polymer is mixed with water or milk buffer and the probiotic is added in lyophilised form, whereupon the product is different in the nutritional properties, even in case of using buffer water. When the probiotic is lyophilized, it is alive but not active, thus initiating its reactivation upon contact with saliva because of the body temperature and humidity, which often estimated digestion time is not sufficient for reactivation and the pH of digestive apparatus are also not a favourable environment so that they can be anchored in the intestine and exert their beneficial effect.

- Patent AR043226: Golosina de banana con recubrimiento de azúcar. (Espinosa Victor Orlando), 19-02-2004. This patent describes the processing method which involves placing previously banana pulp macerated and drained together with water in a ratio for 1 volume for water per 5 vol. Pulp and from 750 to 1000 g of sugar per kilogram of said pulp, boil until the syrup is formed around the pulp agrume without actually caramelize. This patent differs from the present invention in the preparation process and that does not make use of fermented by lactic bacteria products.
- Patent AR044359. Golosina de soja, (Alvarez Nilda del Valle, Jandula Alberto Mario, Genta Maria Luisa, Genta Hugo Dante, Sollazzi Cisisnt Silvia Estela), 17-05-2004. The raw materials used in developing the patent of candy are pre-treated soybeans, peanuts, sugar, glucose, hydrogenated vegetable oil, vanilla essence. The manufacture of candy consists basically in a spray of grains, mixed with the other ingredients and new spray, pressing and packaging. Does not mention any such of lactic acid bacteria fermented product and the manufacturing process and ingredients used are different from the current invention.
- Patent US20060018843. Halitosis, gingivitis, and periodontitis treatment and preventative composition. Fine Kenneth, D. 26-01-2006. This invention relates to oral hygiene, and describes the composition comprising as active ingredient one or more probiotic microorganisms to prevent and eliminate halitosis, gingivitis, and periodontitis. Although various presentations claimed for this composition (toothpaste, mouthwash, lozenges and chewing gum), these are different products and for other purposes of the current invention.
- Patent JP 49047548 A. Lactobacillus containing jelly production by culturing lactobacillus in medium including glucose, yeast extract and chlorella extract, adding gelling agent and seasoning, and gelling. Takechi chlorella. 05-08-1974. Relates to the manufacture of a product based on extracts of yeast and / or alga Chlorella that is fermented by Lactobacillus cultures in which the fermented product is combined with gelatin to achieve gelatinization of the extract.

Therefore, within the state of the art known the holders of herein, although products of this kind exist in whose compositions include some of the components contained in the invention proposed, none of them include all of the themselves or apply a similar procedure for obtaining them and can therefore be noted that there is no known other invention having characteristics similar to those presented by the invention herein disclosed, being therefore highlighted the novelty of the present invention and which protection is sought for these types of inventions is offered.

### DETAILED DESCRIPTION

The present invention develops in the method of making gelled products and probiotics or symbiotic candies that makes use of gelling agents.

For the purpose of this invention the term "probiotics", "probiotic micro-organism" or "probiotics" is meant to include any organism, cell content or metabolites of microorganisms that have beneficial effects for the host, both cited in herein other similar properties and behaviours.

The term "prebiotic" herein means any type of food to include in its composition nondigestible food ingredients that benefit the consumer.

The term "symbiotic" herein means any food which includes in its membership both prebiotics probiotic as ingredients.

The term "gelled food product" herein means any food produced using a gelling agent, and other ingredients or additives that can be incorporated.

The products developed in the current invention although different in composition depending on the type of juice or beverage is used, provide gelled foods rich in nutrients, offering different flavours which may be added vitamins, minerals, etc. to possess different nutritional characteristics. These food products are perfectly suitable in dietary control processes through its low calorie content, for people with swallowing problems, for all kinds of people from children to seniors, athletes and people with lactose intolerance because most foods containing probiotics on the market have dairy origin. By using several gelling of vegetal origin products (agar agar, carrageenan), are suitable for vegetarians. Thus we can obtain numerous products with various beneficial health effects.

The inclusion of polysaccharides with prebiotic properties improves survival of the microorganism during the life of the product and the introduction of the microorganism in the intestine after ingestion.

For the gelled products obtaining as described herein were used as raw material various pasteurized or sterilized juices everyday consumer (such as tomato juice, carrot, peach, grape, soymilk and rice drink) to which are added the CECT probiotics (Spanish Type Culture Collection). The inclusion of probiotic strains, has the consequence that the manufactured products possess multiple functional and nutritional properties, depending on each case of bacteria and beverages used.

The lactic acid bacteria used ferment the sugars of used beverage producing lactic acid, volatile compounds and polysaccharides.

All employed beverages have sufficient amount of mono-and disaccharides to ensure fermentation and obtain a good source of probiotic available but may also be added sugars or sweeteners before or after fermentation.

As noted, the basic components for obtaining the gelled products herein will be fermented juice and the gelling agent, although for practical applications proceed to the addition of several elements such as sugars, sweeteners and / or additives, so as to obtain products suitable for commercialization.

The basic method for obtaining gelled with probiotic products entail the following steps which are cited below:
a) Sterilization and fermentation of the substrate.
b) Hydration of gelatin.
c) Dissolution of gelatin in water at temperatures between 80-85 ° C.
d) Aseptically cooling to approximately 40 ° C.
f) Adding the fermented substrate and any other additives, homogenization of the mixture.
g) Packaging.
h) Refrigerate.

These products can be fortified with vitamins, minerals, proteins, carbohydrates, fatty acids, fiber, or other types of oligosaccharides with bifidogenic effect, or additives to meet the needs of specific sectors of the population, or improve their conservation.

Can also use other types of gelling agents or mixtures thereof with other thickening agents such as locust bean gum, guar gum, xanthan gum, etc.

The gelled products with probiotic and symbiotic properties from the current invention may be used as coating agents of other foods, such as cut products. Also can be employed as fillers in other foods.

For the production of gelled probiotics and / or prebiotics polysaccharides enriched is possible to use many different types of fermentation substrates. Tests have been conducted with very positive results using the following lactic ferments: *Streptococcus thermophilus* together with *Lactobacillus delbruekii subsp. bulgaricus, Lactobacillus rhamnosus, Lactobacillus casei, Lactobacillus acidophilus, Lactobacillus plantarum.* Similarly could be incorporated to these products, as probiotic Bifidobacterium species and other Lactobacillus strains.

The obtained products possess the same consistency and other sensory characteristics of commercial gelatins with approximate viscosity values between 10 and 75 mps, humidity between 8% and 13%, while the microbiological tests performed on these products according to the standards microbiological established for edible gelatine showed levels below the limits. In the examples have been studied life periods of 30 days, as is done for gelled products sold in refrigeration.

Although it is feasible the use of different percentages of juice or fermented beverage, concentrations of viable probiotic microorganisms obtained when adding a 15% juice or fermented beverage made its use feasible at industrial level as it is within the range of juice that currently used in commercial gelatins. This leads to produce gelatin probiotic, with small variations in the usual processing without major changes in the formulation, yet achieving a significant improvement of the functional properties of the finished product, with additional health benefits over the existing in the current state of the art.

As can be seen in the first three examples of present invention manufacturing practices, had been achieved high concentrations of viable probiotic microorganisms, such as in the finished product at the end of its useful life. These results are independent of the type and amount of juice or fermented beverage employed, and also of the type of probiotic organism.

Another practical application of the present invention is the development of probiotic or symbiotic sweets, starting from the same preparation procedure and including no significant variations. Employment is part of vegetable juices like tomato juice or carrot in conjunction with gelling agents such as gelatin or the like.

Candy with probiotics will consist of the following ingredients that characterize its formulation:
□ fermented juice (or other fermentable beverages).
□ glucose syrup or other sweetener solution.
□ sugars or sweeteners
□ gelatin or other type of gelling agents.
□ citric acid, vitamins, minerals, prebiotics, or other types of additives.

Although, and as indicated in the exemplary embodiments, it is possible to modify one or more of these components in order to provide the final product with some additional property.

In general, any type of valid vegetable juice drinks, cereals and / or legumes, as fermentation substrate for carrying out the production of candies. It will also be possible to add to the fermentation substrate of various types of carbohydrates and sugars as adjuvants. Also exists the possibility of starting from a Jellies fermentation substrate different vegetable juices, such as using milk.

Existing prior knowledge on the use of different lactic acid bacteria for fermentation of various substrates, such as vegetables or milk drinks and other fruit or vegetable juices, lets us know in advance that the fermentation is carried out with the same success as the substrate and ferment used in the present invention in the case of employment of other bacteria such as Bifidobacterium, Streptococcus, other strains of Lactobacillus and / or addition of any yeast or juice drink above.

The obtained products have the same basic sensorial characteristics as Jellies currently on the market, although their nutritional composition is quite different, since they possess probiotic microorganisms and their calorie content is lower than commercial reducing sugars by replacing his drinks formulation or fermented fruit juices, or also by replacing these artificial sweeteners or sugars by nonmetabolizable sugars, also with the possibility of enriched with vitamins, minerals, additives, fatty acids, etc..

Thus we get a range of probiotic gummy, suitable for diabetics, to replace sugars with sweeteners. For vegetarians, to substitute for gelling agents such as gelatin, agar agar, carrageenan, etc., to people in dietary control process, since it reduces the caloric content and for people with lactose intolerance in those formulations which do not contain as fermented drink milk or dairy products.

An important application of the present invention is the use of probiotic formulations as Jellies coating agent or additional ingredient cereals, cookies, candies, etc.. after processing, thus being able to obtain a number of probiotic products to which its process so far is very difficult to incorporate microorganisms.

The procedure for obtaining the probiotic gums comprising the following steps:
a) Sterilization of the substrate (juice) and probiotic fermentation.
b) Hydration of the gelatin with the fermented juice until completely dissolved.
c) Dissolution mixed with sugar and glucose syrup and the resulting syrup after cooking.
d) Incorporation of additives (as mentioned above, these additives may be multiple classes, also including prebiotics).
e) cooling the syrup.
f) Adding the gelatin solution.
g) Introduction of the mixture in the reservoir system.
h) Drying of the product in the mold tank.
i) release and product cleanliness.
j) Application of coating agents (oils, carnauba wax, beeswax, etc.).

However, as mentioned, there are variations in certain steps of the process for the preparation of, for example, sugarless gums symbiotic. The procedure in this case would vary product components which involves variations in the preparation process. In any case, the essence of the invention remains unchanged since it is not affected by small variations that may be introduced.

### EXAMPLES OF IMPLEMENTATION

The present invention is illustrated by the following examples, their representation pretending not to limit its scope in any case, either partially or fully:

### Example 1.

### Obtaining probiotic gelatins with St. thermophilus and various Lactobacillus strains from vegetable beverages. Viability of probiotics along the product service life depending on the concentration of juice added and the type of microorganism.

Materials used: vegetable juices (carrot and tomato), fruit juices (peach and grape). As gelling agent gelatin is used.

Microbiological methods: the petri plate counts were performed for: enterobacteria, Coliforms, Salmonella and Shigella and Clostridium Perfingens, S. aureus, Streptococcus and Lactobacillus.

Firstly must obtain a pasteurized or sterilized substrate, in this particular example juices received UHT treatment. Then fermented at 37 ° C for about 24 hours, although this time period may be modified to achieve the convenience for desired microorganism concentration. It is also possible at this stage of manufacturing the addition of monosaccharides and / or disaccharides.

Were used various combinations of St. thermophilus and Lactobacillus:
- *St. thermophilus* + *Lactobacillus casei*
- *St. thermophilus* + *Lactobacillus delbruekii subsp. bulgaricus*
- *Lactobacillus acidophillus*
- *Lactobacillus plantarum.*

After fermentation time, it proceeds to the hydration of the gelatin and in parallel it is then dissolved in hot water 80 to 85 ° C once the gelatin dissolved in water under aseptic conditions until the temperature decreases 40 ° C. Once reached this temperature, are added different concentrations of gelatin solution (eg 15% or 50%, although other concentrations can be used above or below the indicated), the mixture is homogenized and is applicable to the packaging of the product, while cooling for about 2 hours, until the proper consistency and kept refrigerated at 4 ° C. To the ingredients can be added sugar, sweeteners, vitamins, minerals, fiber, thickeners, dyes or fragrances.

In order to study the viability of probiotic bacteria, microbiological count was performed after processing and after 30 days of cold preservation, for the following products:
- *St. thermophilus* + *Lactobacillus casei, St. thermophilus* + *Lactobacillus delbruekii subsp. bulgaricus, Lactobacillus acidophillus, Lactobacillus plantarum,* in a 15% carrot juice (table 1).
- *St. thermophilus* + *Lactobacillus casei, St. thermophilus* + *Lactobacillus delbruekii subsp. bulgaricus, Lactobacillus acidophillus, Lactobacillus plantarum,* in a 50% carrot juice (table 2).
- *St. thermophilus* + *Lactobacillus casei, St. thermophilus* + *Lactobacillus delbruekii subsp. bulgaricus, Lactobacillus acidophillus, Lactobacillus plantarum,* in a 15% tomato juice (table 3).
- *St. thermophilus* + *Lactobacillus casei, St. thermophilus* + *Lactobacillus delbruekii subsp. bulgaricus, Lactobacillus acidophillus, Lactobacillus plantarum,* in a 50% de tomato juice (table 4).
- *St. thermophilus* + *Lactobacillus casei, St. thermophilus* + *Lactobacillus delbruekii subsp. bulgaricus, Lactobacillus acidophillus, Lactobacillus plantarum,* in a 15% peach and grape juice (table 5).
- *St. thermophilus* + *Lactobacillus casei, St. thermophilus* + *Lactobacillus delbruekii subsp. bulgaricus, Lactobacillus acidophillus, Lactobacillus plantarum,* in a 50% peach and grape juice (table 6).

**TABLE 1**

| **Carrot 15ml** | *St. thermophilus* + *L. casei* | | *St. thermophilus* + *L. delbrueckii* | | *L.acidophilus* (ufc/g) | *L.plantarum* (ufc/g) |
|---|---|---|---|---|---|---|
| t(days) | St (ufc/g) | Casei (ufc/g) | St (ufc/g) | Delb (ufc/g) | | |
| 0 | 7,6*10⁷ | 7,1*10⁸ | 3,6*10⁸ | 8,2*10⁸ | 6,5*10⁸ | 8,6*10⁸ |
| 30 | 6,6*10⁷ | 4,1*10⁷ | 9,7*10⁷ | 5,5*10⁸ | 4,4*10⁸ | 1,1*10⁸ |

**TABLE 2**

| **Carrot 50ml** | *St. thermophilus* + *L. casei* | | *St. thermophilus + L. delbrueckii* | | *L.acidophilu s* (ufc/g) | *L.plantaru m* (ufc/g) |
|---|---|---|---|---|---|---|
| t(days) | St (ufc/g) | Casei (ufc/g) | St (ufc/g) | Delb (ufc/g) | | |
| 0 | 7*10⁸ | 9,5*10 8 | 3,4*10⁸ | 1,33*10 9 | 8,8*10⁸ | 1,07*10⁹ |
| 30 | 4,6*10 ⁸ | 7,1*10 ⁸ | 1,85*10 ⁸ | 1,21*10 ⁹ | 7,3*10⁸ | 9,3 *10⁸ |

**TABLE 3**

| **Tomato 15ml** | *St. thermophilus* + *L. casei* | | *St. thermophilus* + *L. delbrueckii* | | *L.acidophilu s* (ufc/g) | *L.plantaru m* (ufc/g) |
|---|---|---|---|---|---|---|
| t(days) | St (ufc/g) | Casei (ufc/g) | St (ufc/g) | Delb (ufc/g) | | |
| 0 | 4,6*10⁷ | 5,2*10 ⁷ | 8,8*10 ⁷ | 5*10⁸ | 5,9*10⁸ | 7,6*10⁸ |
| 30 | 2,47*10 ⁷ | 2,2*10 ⁷ | 3*10⁷ | 3,4*10 ⁸ | 1,03*10⁸ | 5,7*10⁸ |

**TABLE 4**

| **Tomato 50ml** | *St. thermophilus* + *L. casei* | | *St. thermophilus* + *L. delbrueckii* | | *L.acidophilu s* (ufc/g) | *L.plantaru m* (ufc/g) |
|---|---|---|---|---|---|---|
| t(days) | St (ufc/g) | Casei (ufc/g) | St (ufc/g) | Delb (ufc/g) | | |
| 0 | 1,45*10 ⁸ | 5,3*10 ⁸ | 3,6*10⁸ | 6,1*10 ⁸ | 1,3*10⁹ | 1,09*10⁹ |
| 30 | 1,04*10 ⁸ | 2*10⁸ | 2,16*10 ⁸ | 4*10⁸ | 1,1*10⁹ | 9,1*10⁸ |

**TABLE 5**

| **Peach 15ml** | *St. thermophilus* + *L. casei* | | *St. thermophilus* + *L. delbrueckii* | | *L.acidophilus* (ufc/g) | *L.plantarum* (ufc/g) |
|---|---|---|---|---|---|---|
| t(days) | St (ufc/g) | Casei (ufc/g) | St (ufc/g) | Delb (ufc/g) | | |
| 0 | 5,7*10⁷ | 1,5*10⁸ | 1,5*10⁸ | 3*10⁸ | 7*10⁸ | 3*10⁸ |
| 30 | 4,1*10⁷ | 8,4*10⁷ | 1,05*10⁸ | 9,2*10⁷ | 2,19*10⁸ | 2,4*10⁸ |

**TABLE 6**

| **Peach 50ml** | *St. thermophilus* + *L. casei* | | *St. thermophilus* + *L. delbrueckii* | | *L.acidophilus* (ufc/g) | *L.plantarum* (ufc/g) |
|---|---|---|---|---|---|---|
| t(days) | St (ufc/g) | Casei (ufc/g) | St (ufc/g) | Delb (ufc/g) | | |
| 0 | 1,03*10⁸ | 7,3*10⁷ | 3*10⁸ | 5,3*10⁸ | 1,05*10⁹ | 8,8*10⁸ |
| 30 | 3,6*10⁷ | 4*10⁷ | 2,2*10⁸ | 6,1*10⁸ | 2,8*10⁸ | 8,3*10⁸ |

In conclusion we can state that in all cases, the microorganisms remain with the same order of viability in the initial concentrations, being within the ranges recommended for products containing probiotics at the end of its useful life (106-107 cfu/g).

### Example 2.

### Synbiotic product obtaining gelled agar base from tomato juice. Observing the viability of the probiotic microorganisms depending on the amount of added inulin juice and throughout life.

Materials used: This example was performed using as gelling agent agar, tomato juice and inulin.

Microbiological methods: the petri plate counts were performed for: enterobacteria, Coliforms, Salmonella and Shigella and Clostridium perfingens, S. aureus and Lactobacillus.

First, must be obtained pasteurized or sterilized substrate, in this case the tomato juice received UHT treatment. Then fermented at 37 ° C for about 24 hours, to obtain the desired microorganism concentration, although this step may be performed with different fermentation times and with and without addition of monosaccharides and disaccharides. Fermentation takes place with Lactobacillus plantarum. Prior knowledge of the use of this probiotic together with inulin indicates that the addition of inulin can be performed before or after finishing the fermentation, fermenting microorganism such as first substrate sugars from inulin using the long term.

After the fermentation time, the gelled product is made with agar, maintaining boiling for approximately 7 minutes and left under aseptic conditions to decrease the temperature to about 40 ° C. Once reached this temperature, there are added various concentrations of fermented juice: 15%, 30% and 50% (although it can use any or lower concentration than indicated), and inulin (between 0, 1 and 3g). Is homogenized and then proceed to the packaging of the product, cooling for about 45 minutes, to achieve the proper consistency and kept refrigerated at 4 ° C. To the ingredients can be added sugar, sweeteners, vitamins, minerals, fiber, thickeners, dyes or fragrances.

To study the viability of probiotic bacteria were counted after processing microbiological and 30 days of cold preservation, as in Example 1, for the following products:
• *Lactobacillus plantarum* with 15% tomato juice in 0, 1 and 3 grams of inulin (table 7).
• *Lactobacillus plantarum* with 30% tomato juice in 0, 1 and 3 grams of inulin (table 8).
• *Lactobacillus plantarum* con 50% tomato juice in 0, 1 and 3 grams of inulin (table 9).

**TABLE 7**

| *L. plantarum* | 0g INULIN (ufc/g) | 1g INULIN (ufc/g) | 3g INULIN (ufc/g) |
|---|---|---|---|
| **15% TOMATO JUICE (days)** | | | |
| 0 | 1,35*10⁸ | 3*10⁸ | 3,3*10⁸ |
| 30 | 3,8*10⁷ | 1,82*10⁸ | 1,5*10⁸ |

**TABLE 8**

| *L. plantarum* | 0g INULIN (ufc/g) | 1g INULIN (ufc/g) | 3g INULIN (ufc/g) |
|---|---|---|---|
| **30% TOMATO JUICE (days)** | | | |
| 0 | 7,4*10⁸ | 3,5*10⁸ | 9,6*10⁸ |
| 30 | 1,3*10⁸ | 1,67*10⁸ | 2,11*10⁸ |

**TABLE 9**

| *L. plantarum* | 0g INULIN (ufc/g) | 1g INULIN (ufc/g) | 3g INULIN (ufc/g) |
|---|---|---|---|
| **50% TOMATO JUICE (days)** | | | |
| 0 | 1,16*10⁹ | 1,14*10⁹ | 2,15*10⁹ |
| 30 | 1,92*10⁸ | 1,70*10⁸ | 5,9*10⁸ |

Results show that the viability of Lactobacillus plantarum remains in the same order after 30 days of storage, regardless of the amount of juice used in the formulation (15, 30, 50%). Inulin improves survival of the microorganism during the product life.

### Example 3.

### Preparation of probiotic products based gelled carrageenan from rice and soybean beverage.

Materials used: This assay was performed using carrageenan as gelling agent, rice and soybean beverage.

Microbiological methods: the petri plate counts were performed for: enterobacteria, Coliforms, Salmonella and Shigella and Clostridium perfingens, S. aureus and Lactobacillus.

First, must be obtained pasteurized or sterilized substrate, in this case the rice and soya drinks received a UHT treatment. Then fermented at 37 ° C between 4 and 6 hours, until pH 4.5. Fermentation was carried out with Lactobacillus acidophilus and Lactobacillus rhamnosus.

After the fermentation time is performed with carrageenan gelled product, increasing the temperature to 60-70 ° C and left under aseptic conditions to decrease the temperature to about 40-45 ° C. Once reached this temperature, there are added various concentrations of fermented beverage: 20% and 40% (although it can use any or lower concentration than indicated). Is homogenized and then proceed to the packaging of the product, cooling for about 45-60 minutes, to achieve the proper consistency and kept refrigerated at 4 ° C. To the ingredients can be added sugar, sweeteners, vitamins, minerals, fiber, thickeners, dyes or fragrances to alter their organoleptic characteristics.

To study the concentration of viable probiotic microorganisms in the final product were counted after developing microbiological products.
- *Lactobacillus acidophilus* with 20% and 40% soymilk (table 10).
- *Lactobacillus rhamnosus* with 20% and 40% rice drink (table 11).

Results for both beverages tested showed that the concentrations of viable microorganisms are of the order of the recommended amounts of probiotics, and various fermented beverage percentages used in the formulation.

**TABLE 10**

| ***L. acidophilus*** | **20% Soymilk** (ufc/g) | **40% Soymilk** (ufc/g) |
|---|---|---|
| Time 0 | 7,8*10⁸ | 8,6*10⁹ |

**TABLE 11**

| ***L. rhamnosus*** | **20% rice drink** (ufc/g) | **40% rice drink** (ufc/g) |
|---|---|---|
| Time 0 | 1,79*10⁷ | 2*10⁷ |

### Example 4.

### Elaboration of probiotic sweets.

This example uses the following ingredients, in the proportions reflected in volume, that will conform the final product:
□ fermented tomato juice (37.14%)
□ Glucose syrup (36.20%)
□ Sucrose (18%)
□ Gelatin (8%)
□ Citric acid (0.66%)

Manufacturing process:
1. Tomato juice Fermenting with L. plantarum during 24h at 37 ° C, to obtain the desired microorganism concentration, although there is the possibility of testing with different fermentation times with and without addition of monosaccharides and disaccharides.
2. Hydrate the gelatin with the juice fermented at 37 ° C until completely dissolved.
3. Dissolve the sugar and mixing with sugar syrup, this sugar syrup is cooked mixed at approximately 115 ° C.
4. Incorporation of any additive, such as citric acid, dyes, vitamins, minerals, fiber or oligosaccharides, etc..
5. Cool the syrup to 40 ° C approximately.
6. Add the gelatin solution.
7. This product is inserted into the deposit system and deposited into starch molds.
8. The molds are dried in oven at 20 ° C until the gums, reach the final moisture content 12-14%.
9. Unmold candy and remove the starch adhered to these.
10. Apply coating agents (oils, carnauba wax, beeswax, etc.).

To study the viability of the probiotic microorganism, was performed in microbiological count after working at 30 and 60 days of refrigerated storage at 4 ° C. (Table 12).

**TABLE 12**

| **Time (days)** | ***L.plantarum* (u.f.c./g)** |
|---|---|
| 1 | 1,43*10⁸ |
| 30 | 1,42*10⁸ |
| 60 | 1,33*10⁸ |

Conclusion it can be asserted that in all cases, the organisms remain in the same order of viability in the initial concentrations during the two months of refrigerated storage. Subsequent studies verified the end of the useful life of both product and probiotic microorganism.

### Example 5.

### Elaboration process of symbiotic jellies with sweeteners.

This example uses the following ingredients, in the proportions reflected in volume, that will conform the final product:
□ fermented carrot juice (37%).
□ maltitol syrup (36.5%).
□ Acesulfame potassium (18%).
□ gelatine (7%).
□ citric acid (0.5%).
□ Inulin (1%).

1. Carrot juice Fermenting with L. plantarum during 24h at 37 ° C, to obtain the desired microorganism concentration, although there is the possibility of testing with different fermentation times with and without addition of monosaccharides and disaccharides.
2. Hydrate the gelatin with the juice fermented at 37 ° C until completely dissolved.
3. Dissolve the acesulfame potassium and mixed with maltitol syrup, boiling at about 115 ° C.
4. Add the prebiotic, inulin and in this case citric acid. If desired, colorants can be added, or other additives such as vitamins, minerals, etc.
5. Cool the syrup to 40 ° C approximately.
6. Add the gelatin solution.
7. This product is inserted into the deposit system and deposited into starch molds.
8. The molds are cooled in a refrigerated 2-4 ° C for about 8 hours for the candy to cool and solidify.
9. Unmold candy and remove the starch adhered to these.
10. Apply coating agents (oils, carnauba wax, beeswax, etc.).

To check the probiotic's viability, microbiological count was performed after preparation (Table 13).

**TABLE 13**

| **Time (days)** | ***L.plantarum* (u.f.c./g)** |
|---|---|
| 1 | 2,17*10⁸ |

### Example 6.

*Process for elaboration of probiotic liquid filled gummy.*
1. Fermenting the juice or drink with lactic bacteria selected for 24h at 37 ° C, to obtain the desired microorganism concentration, although there is the possibility of testing with different fermentation times with and without addition of monosaccharides and disaccharides.
2. Dissolve the sugar and mixing with sugar syrup and gelatin, this sugar syrup is cooked and mixed gelatin approximately 115 ° C.
3. Incorporation of any additive, such as citric acid, dyes, vitamins, minerals, fiber or oligosaccharides, etc..
4. Introducing a deposit system and deposit into starch molds.
5. Allow to cool to a temperature of 40-50 ° C.
6. After reaching that temperature, using an injection system, introducing the juice or fermented beverage.
7. The molds are cooled in a refrigerated 2-4 ° C for about 8 hours for the candy to cool and solidify.
8. Unmold candy and remove the starch adhered to these.
9. Apply coating agents (oils, carnauba wax, beeswax, etc.).

Sufficiently described the nature of the present invention, as well as how to implement it, it is not considered necessary to make wider the explanation to anyone skilled in the art may understand the scope and benefits that flow from it, stating that, in its essence, it can be put into practice in other embodiments differ in detail from that shown by way of example, and which will also protect claimed provided it does not alter, change or modify its fundamental principle.

## Claims

1. PROBIOTICS OR SYMBIOTICS GELLED PRODUCTS, fermentable beverages based and one or more gelling agents compounds where the vegetable beverages have previously undergone a fermentation process by using at least one strain of Lactobacillus and / or Streptococcus, those employed alone or in combination.

2. The probiotics or symbiotics gelled products of claim 1, where includes one or more additives in their composition, those additives can be, among others, syrup, artificial sweeteners, non-metabolizable sugars, proteins, carbohydrates, fatty acids, vitamins, minerals and / or other types of fiber or oligosaccharides with bifidogenic effect.

3. The probiotics or symbiotics gelled products of claim 1, where the gelling agent used is gelatin, agar agar or carrageenan

4. The probiotics or symbiotics gelled products of claims 1 and 3, where are used together with thickeners also gelling agents such as locust bean gum, guar gum, xanthan gum, acacia gum, pectins, etc..

5. The probiotics or symbiotics gelled products of claim 1, where the fermentation substrate is carrot juice, tomato juice, peach juice and grape, rice drink, soy beverage, or a combination of two or more thereof.

6. The probiotics or symbiotics gelled products of claims 1 and 3, where fermentation substrate has been previously pasteurized or sterilized.

7. The probiotics or symbiotics gelled products of claim 1, where comprising ferment lactic bacteria Streptococcus thermophilus.

8. The probiotics or symbiotics gelled products of claim 1, where the ferment comprises one of the following as probiotic Lactobacillus species: L. delbruekki subsp. bulgaricus, L. acidophilus, L. plantarum, L. casei, L. rhamnosus; or probiotic Bifidobacterium species, Streptococcus, or other strains of Lactobacillus and / or yeasts.

9. The probiotics or symbiotics gelled products of claims 1 and 3, where the substrate of the fermentation is added as adjuvant substrates with various types of carbohydrates and sugars.

10. The probiotics or symbiotics gelled products of claims 1, 2, 5, 6, 7, 8 and 9 where its composition includes the following ingredients proportions by volume:
o Tomato juice fermented (37.14%)
o Glucose syrup (36.20%)
o Sucrose (18%)
o Gelatin (8%)
o Citric acid (0.66%)

11. The probiotics or symbiotics gelled products of claims 1, 2, 5, 6, 7, 8 and 9 where its composition includes the following ingredients proportions by volume:
• fermented carrot juice (37%).
• maltitol syrup (36.5%).
• Acesulfame potassium (18%).
• gelatine (7%).
• Citric acid (0.5%).
• Inulin (1%).

12. The probiotics or symbiotics gelled products of claims 1, 2, 5, 6, 7, 8 and 9 where its composition includes the following ingredients
• Fruit or vegetable drinks fermented.
• Gelling Agent
• Inulin
• Additives

13. ELABORATION PROCEDURE FOR GELLED PROBIOTICS OR SYMBIOTICS PRODUCTS comprising the following steps:
a) Obtaining a pasteurized or sterilized substrate.
b) Fermentation of the substrate with Streptococcus thermophilus or Lactobacillus.
c) After fermentation proceeds to the hydration of the gelatin (or other gelling agent) and dissolving it in hot water.
d) cooling the hydrated gelatin.
e) After cooling, add the fermented vegetable beverage along with the prebiotic and other additives selected.
h) homogenizing the mixture.
g) the product packaging, cooling for about 2 hours, to obtain proper consistency and finally kept refrigerated at 4 ° C.

14. The elaboration procedure for gelled probiotics or symbiotics products of claim 13, where is modified the following step:
c) Once past the fermentation time is gelled with agar-agar, bringing to a boil.

15. The elaboration procedure for gelled probiotics or symbiotics products of claims 13 and 14, where in step c), the hot water is at a temperature between 80 and 85 ° C.

16. The elaboration procedure for gelled probiotics or symbiotics products of claims 13 and 14, where in step d), the cooling is performed to a temperature of approximately 40 ° C.

17. The elaboration procedure for gelled probiotics or symbiotics products of claim 13, where in step c), is hydrated gelatin with the juice fermented at 37 ° C until dissolution, while on the other side is dissolved sugar mixed with glucose syrup and cook to about 115 ° C. Also, the step e) is compulsorily changed since it is added to the solution of sugars glucose syrup the gelatine solution, preparing the mixture in molds finally drying in an oven at 20 ° C until reaching a moisture content of 12-14%.

18. The elaboration procedure for gelled probiotics or symbiotics products of claim 13 and 17, where sugars are replaced by sweeteners, so that are modified the following steps:
c) the gelatin is hydrated with the juice fermented at 37 ° C until dissolution, while on the other side is dissolved sweetener (eg potassium acesulfame) and maltitol syrup mixture, heating the mixture to approximately 115 °.
g) The molds are cooled in a freezer for about 8 hours until the mixture solidifies.

19. The elaboration procedure for gelled probiotics or symbiotics products of claim 13, 17 and 18 where is removed the step g) of packaging, but the fermented juice is introduced by injection into the treat, acting as a filler thereof.
